Europäisches Patentamt

European Patent Office

Office européen des brevets

(19)

(11) **EP 1 433 860 A1**

(12) **EUROPEAN PATENT APPLICATION**

(43) Date of publication:
**30.06.2004 Bulletin 2004/27**

(51) Int Cl.[7]: **C22B 11/00**, C22B 3/14,
C01G 1/12

(21) Application number: **02080458.9**

(22) Date of filing: **23.12.2002**

| | |
|---|---|
| (84) Designated Contracting States:<br>**AT BE BG CH CY CZ DE DK EE ES FI FR GB GR**<br>**IE IT LI LU MC NL PT SE SI SK TR**<br>Designated Extension States:<br>**AL LT LV MK RO** | (72) Inventors:<br>• **Buisman, Cees Jan Nico**<br>  **8571 RH Harich (NL)**<br>• **Picavet, Merijn Amilcare**<br>  **8607 EJ Sneek (NL)** |
| (71) Applicant: **Paques B.V.**<br>**8561 EL Balk (NL)** | (74) Representative: **van Westenbrugge, Andries et al**<br>**Nederlandsch Octrooibureau**<br>**P.O. Box 29720**<br>**2502 LS The Hague (NL)** |

(54) **Process for regenerating thiosulphate from a spent thiosulphate gold leachant**

(57) A new process of regenerating thiosulphate from a spent thiosulphate solution comprises the steps of:

(a) reacting the spent thiosulphate solution with sulphide to produce elemental sulphur and a regenerated thiosulphate solution,
(b) separating the elemental sulphur from the regenerated thiosulphate solution,
(c) biologically reducing the separated elemental sulphur to produce sulphide, and
(d) returning the sulphide from step (c) to step (a).

This can be applied in a process of extracting noble metals such as gold from a gold-containing slurry by contacting the slurry with a solution containing thiosulphate ions and oxygen to produce a gold thiosulphate solution, contacting the gold thiosulphate solution with an absorbent to produce a gold-loaded absorbent and spent thiosulphate, recovering gold from the gold-loaded absorbent, and regenerating the thiosulphate as described above.

EP 1 433 860 A1

**Description**

The present invention relates to a process of regenerating a thiosulphate solution, that can be used for example in processes for leaching noble metals such as gold leaching and silver leaching.

Significant quantities of gold ore contain sulphidic minerals such as arsenopyrite (FeAsS), pyrite and marcasite ($FeS_2$). These minerals can contain encapsulated gold. This gold is too fine to be liberated by grinding only. This problem is usually overcome through pressure oxidation, which allows the sulphide minerals present in the ore to be oxidised in an aqueous slurry at elevated temperature and oxygen pressure (US 5,071,477). Subsequently the gold present can be readily leached using common leaching agents, rendering the process economical. Typically, pressure oxidation is done under acidic conditions in a multi-compartmented autoclave.

Gold leaching from gold-bearing pressure-oxidised slurries is usually performed using cyanide ions or thiosulphate ions as leaching agents. Typically, the pH of the slurry is adjusted to 10 to 11 when lime and cyanide is added to solubilise the gold. The following reaction applies:

$$4Au + O_2 + 8CN^- + 2H_2O \rightarrow 4Au(CN)_2^- + 4HO^-$$

After leaching, gold is recovered usually through absorption onto activated carbon. However, some ores contain active carbon themselves and can absorb part of the solubilised gold and thus reduce gold recovery. These ores are called carbonaceous ores and the phenomenon of back-absorption is called preg-robbing. Therefore, for carbonaceous ores preferably a different leaching agent is used.

A leaching agent for gold recovery from carbonaceous ores which does not have the above mentioned drawback is thiosulphate e.g. in the form of ammonium thiosulphate $((NH_4)_2S_2O_3)$. A process of extracting silver or gold from ores containing other metals such as manganese, is described in US 4,369,061.

Typical thiosulphate concentrations in the extracting solutions range from 0.03 to 0.05 M. The following solubilisation reaction applies:

$$4Au + O_2 + 8S_2O_3^{2-} + 2H_2O \rightarrow 4Au(S_2O_3)_2^{3-} + 4HO^-$$

According to US 5,785,736, the pressure-oxidised slurry typically contains 30 to 45% solids, has a temperature between 45 and 60°C and a pH between 7 and 8.7. The solubilisation takes place in the presence of copper, which serves as a catalyst.

Subsequently, gold is extracted from the gold-bearing solution through absorption onto an anion exchange resin. The loaded resin is separated from the barren leachate for gold recovery.

A considerable problem encountered when using thiosulphate as a leaching agent is its high consumption due to its instability. The reaction mainly responsible for this is the oxidation of thiosulphate to tetrathionate:

$$2(NH_4)_2S_2O_3 + \tfrac{1}{2}O_2 + H_2O \rightarrow (NH_4)_2S_4O_6 + 2NH_4OH$$

In the presence of hydroxide ions, the unstable tetrathionate decomposes into trithionate and thiosulphate:

$$4(NH_4)_2S_4O_6 + 6NH_4OH \rightarrow 5(NH_4)_2S_2O_3 + 2(NH_4)_2S_3O_6 + 3H_2O$$

Trithionate is also unstable. It decomposes according to the following reaction into thiosulphate and sulphate:

$$(NH_4)_2S_3O_6 + 2NH_4OH \rightarrow (NH_4)_2S_2O_3 + (NH_4)_2SO_4 + H_2O$$

Overall, thiosulphate is oxidised to sulphate:

$$(NH_4)_2S_2O_3 + 2O_2 + 2NH_4OH \rightarrow 2(NH_4)_2SO_4 + H_2O$$

Reversing the oxidation reaction of thiosulphate to tetrathionate using a suitable reductant can lower thiosulphate consumption. This reaction can be reversed by adding ammonium sulphite $((NH_4)_2SO_3)$ to the leaching liquid.

Sulphite reduces tetrathionate according to the following reaction:

$$(NH_4)_2S_4O_6 + 2NH_4OH + (NH_4)_2SO_3 \rightarrow 2(NH_4)_2S_2O_3 + (NH_4)_2SO_4 + H_2O$$

Thus, sulphite is consumed and oxidised to sulphate. This reaction takes place during the leaching process. Instead of sulphite, sulphide an also be used for regenerating thiosulphate. The following reaction applies then:

$$(NH_4)_2S_4O_6 + H_2S + 2NH_4OH \rightarrow 2(NH_4)_2S_2O_3 + S^0 + 2H_2O$$

Possible sources of sulphide are sodium hydrosulphide or pressurised hydrogen sulphide. These sources have drawbacks in that they are difficult to handle and need storage space involving safety measures.

It was found according to the invention that the efficacy of a thiosulphate regeneration process can be increased by using biologically produced hydrogen sulphide ($H_2S$) as a reductant and by subsequently using the resulting elemental sulphur in the biological hydrogen sulphide production.

The big advantage of using biologically produced $H_2S$ is that no storage facilities are required. Production takes place on demand. In addition, solid elemental sulphur $S^0$ is produced, and this can be separated from the liquid and used as a feedstock for biological $H_2S$ production. In other words, $H_2S$ can be regenerated using a suitable reducing agent:

$$S^0 + electron\ donor \rightarrow H_2S + oxidised\ products$$

Thus, the invention pertains to a process of regenerating thiosulphate from a spent thiosulphate solution, comprising the steps of:

(a) reacting the spent thiosulphate solution with sulphide to produce elemental sulphur and a regenerated thiosulphate solution,
(b) separating the elemental sulphur from the regenerated thiosulphate solution,
(c) biologically reducing the separated elemental sulphur to produce sulphide, and
(d) returning the sulphide from step (c) to step (a).

In this context, a spent thiosulphate solution is a solution or dispersion resulting from a thiosulphate-consuming process. It will contain tetrathionate and/or other polythionates, in addition to residual amounts of thiosulphate and other compounds. The regenerated thiosulphate is typically used in the thiosulphate consuming process.

The process of regenerating thiosulphate can be used advantageously in a process of extracting gold form a gold-containing slurry. This can be achieved by contacting the slurry with a solution containing thiosulphate ions and oxygen to produce a gold thiosulphate solution, separating the gold from the gold thiosulphate solution to produce a spent thiosulphate solution and then regenerating the thiosulphate using the process of the invention.

The gold-containing slurry may contain between 10 and 50 wt.% of solids, including gold particles. The gold content of the ore may be between 2 and 200 g of gold/ton. The slurry is contacted with a solution containing between 0.01 and 0.10, especially between 0.03 and 0.06 mol/l of thiosulphate. The thiosulphate may be in any form, including an alkali metal salt or ammonium salt. Oxygen is suitably supplied by aeration, at such a rate that between 0.5 and 1 mol of oxygen is fed per mol of thiosulphate.

The gold leaching may be assisted by addition of copper as a catalyst. Copper metal or copper salts, such as $CuSO_4$ or $CuCl_2$, can be used for this purpose. The copper concentration should preferably be kept in the range of 10-100 ppm.

The solubilised gold is then absorbed on an absorbent such as an anion exchange resins. The loaded absorbent is separated from the leaching solution by settling, e.g. using a clarifier.

The spent thiosulphate solution wherein part of the thiosulphate has been converted to tetrathionate or trithionate is treated with sulphide. The sulphide is produced at the leaching site by biological reduction of elemental sulphur. Such biological production of sulphide can be performed as described in WO 00/29605. The electron donor may be hydrogen, or an alcohol, such as methanol or ethanol, preferably ethanol, or an organic acid, especially a fatty acid such as acetic acid. The selection of the electron donor depends on the sulphur load: at high sulphur loads, hydrogen gas is the preferred electron donor, whereas acetic acid is preferred at relatively sulphur loads.

To ensure biogenic production of $H_2S$, nutrients necessary for biological growth and maintenance are provided. When acetic acid or ethanol is used, only a phosphorus source, a nitrogen source and some trace elements need to be provided. In the case of hydrogen gas a carbon source (e.g. acetic acid) needs to be added as well. A commonly used phosphorus source is phosphate ($PO_4^{3-}$). A commonly used nitrogen source is ammonium ($NH_4^+$). Commercially available nutrient mixtures, such as Nutrimix® (Paques) nutrient solution, can serve as a source for trace elements. The pH in the bioreactor can be about neutral, e.g. between 5 and 9, especially between 6 and 8. A pH controlling agent may added, e.g. in combination with the acetic acid or other nutrient. The total solids concentration is preferably between 5 and 20 g/l, which is adjusted, as necessary, by adding water as such or in combination with the nutrients.

The anaerobic biomass necessary for the biological production of sulphide from sulphur, can be obtained from common sources, e.g. existing sulphur-reducing or sulphide-oxidising bioreactors. These can comprise bacteria e.g. from the genera *Desulforomonas* or *Desulfotomaculum.* The bacteria may be mesophilic or thermophilic e.g. *Desulfotomaculum* KT7. Suitable bacteria are described e.g. in WO 00/29605.

The process of the invention can be performed in two modes. Firstly, the process can comprise the following process:

1. Biological $H_2S$ production from elemental sulphur in a BSG (Biological Sulphide Generator).

2. A contactor where the barren leaching solution is contacted with $H_2S$ to reduce tetrathionate to thiosulphate. A by-product is elemental sulphur.

3. A solid liquid separator where elemental sulphur is separated from the liquid and led back to the BSG.

4. The gold leaching where gold is leached using thiosulphate.

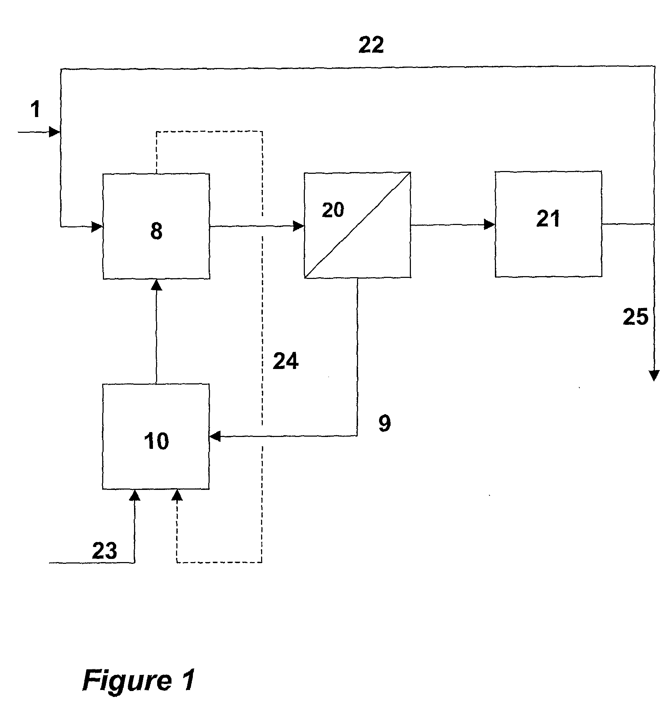

This is schematically shown in Figure 1.

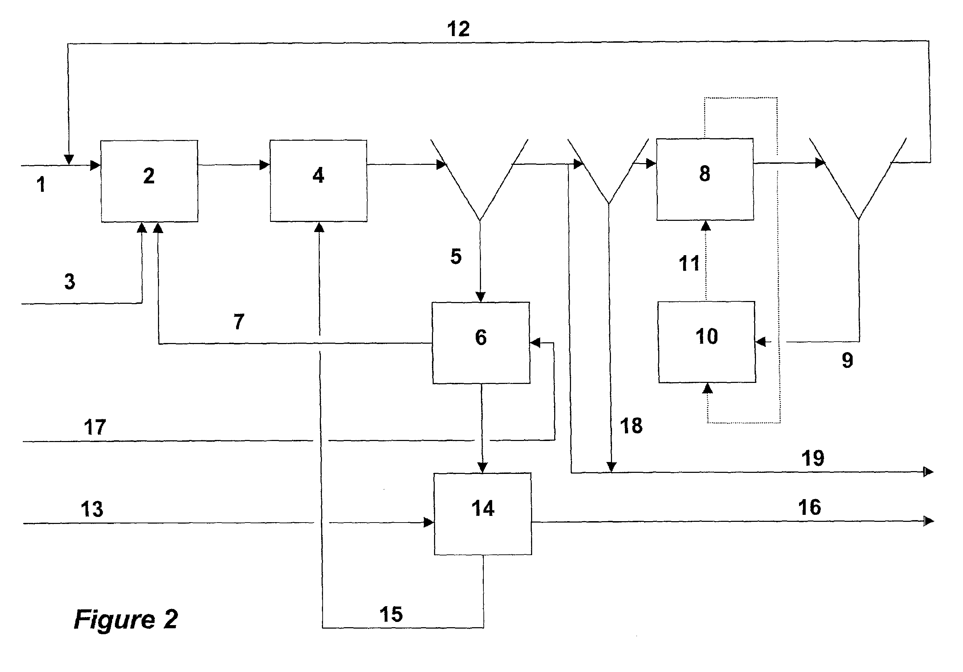

In figures 1 and 2, the reference numbers denote the following:

1: Slurry feed
2: Air supply
3: Leaching
4: Absorption
5: Loaded resin
6: Copper elution
7: Copper recycle
8: Contactor
9: Elemental sulphur
10: BSG
11: Hydrogen sulphide
12: Ammonium thiosulphate recycle
13: Potassium cyanide solution
14: Gold recovery
15: Resin recycle
16: To gold recovery
17: Ammonium thiosulphate solution
18: Pulp
19: To tailings pond
20: Separator
21: Gold leaching
22: Liquid recycle
23: Electron donor and nutrients
24: Gas recycle
25: Process bleed

Figure 2 shows a second mode of the process of the invention, and shows a more detailed flow scheme. A pressure-oxidised slurry (1) is mixed with an ammonium thiosulphate recycle (12) and fed to the leaching phase (2). Air (3) is sparged to provide the necessary oxygen for the solubilisation of the gold. Furthermore, a copper recycle (7) is led to the leaching phase as a catalyst. After leaching, the solubilised gold is absorbed onto a suitable anion exchange resin in an absorption stage (4). The loaded resin is separated from the liquid and pulp. The liquid goes to the thiosulphate regeneration, while the resin goes to the gold recovery.

First, the loaded resin (5) is treated with an ammonium thiosulphate solution (17) to elute the copper (6). This solution is then recycled to the leaching stage (2) providing the copper catalyst and fresh ammonium thiosulphate. After the copper has been eluted, the resin goes to the gold recovery stage (14). Here, the resin is contacted with a potassium cyanide solution (13) and the gold goes into solution again. The gold-bearing solution goes to the actual gold recovery (16).

After the resin has been separated, part of the slurry goes directly to the tailings pond (19). The rest is fed to a separation stage where the pulp (18) is separated from the liquid. The remaining liquid goes to a contactor (8) where it is contacted with $H_2S$-bearing gas (11) coming from a biological sulphide generator (11). The sulphide reacts with tetrathionate present and forms solid elemental sulphur $S^0$. Subsequently, the sulphur is separated (9) and serves again as feed for the BSG. The liquid is recycled (12) to the gold leaching stage.

**Claims**

1. A process of regenerating thiosulphate from a spent thiosulphate solution by reacting the spent thiosulphate solution with a sulphide source, comprising the steps of:

(a) reacting the spent thiosulphate solution with sulphide to produce elemental sulphur and a regenerated thiosulphate solution,
(b) separating the elemental sulphur from the regenerated thiosulphate solution,
(c) biologically reducing the separated elemental sulphur to produce sulphide, and
(d) returning the sulphide from step (c) to step (a).

2. A process according to claim 1, wherein hydrogen, an alcohol or an organic acid is used as an electron donor in the biological reduction step (c).

3. A process according to claim 1 or 2, wherein the regenerated thiosulphate solution resulting from step (b) has a thiosulphate concentration between 0.01 and 0.10 M.

4. A process of extracting a noble metal from a metal-containing slurry, by contacting the slurry with a solution containing thiosulphate ions and oxygen to produce a metal thiosulphate solution, separating the noble metal from the metal thiosulphate solution to produce a spent thiosulphate solution, *characterised* **by** regenerating the spent thiosulphate solution by the process of any one of claims 1-3.

5. A process according to claim 4, wherein the noble metal is separated from the thiosulphate solution by contacting the metal thiosulphate solution with an absorbent and recovering noble metal from the metal-loaded absorbent.

6. A process according to claim 5, wherein the absorbent is an anion exchange resin, which after step (c) is returned to step (b).

7. A process according to claim 5 or 6, for extracting gold, wherein the absorbent contacting is carried out in the presence of copper ions, and copper ions are subsequently eluted from the gold-loaded absorbent.

**22**

**1**

**8**

**20**

**21**

**25**

**24**

**9**

**10**

**23**

*Figure 1*

Figure 2

EP 1 433 860 A1

European Patent
Office

**EUROPEAN SEARCH REPORT**

Application Number

EP 02 08 0458

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | WO 01 36333 A (PETERS ANNA SABINE ;BUISMAN CEES JAN NICO (NL); JANSSEN GUIDO HUBE) 25 May 2001 (2001-05-25) * page 3, line 25-34 * --- | 1,2 | C22B11/00 C22B3/14 C01G1/12 |
| Y | WO 00 29605 A (BUISMAN CEES JAN NICO ;DIJKMAN HENK (NL); PAQUES BIO SYST BV (NL)) 25 May 2000 (2000-05-25) * page 1, line 9 - line 13; claim 1 * --- | 1,2 | |
| A | US 5 785 736 A (FLEMING CHRISTOPHER ET AL) 28 July 1998 (1998-07-28) * the whole document * --- | 4-7 | |
| Y | US 4 369 061 A (KERLEY JR BERNARD J) 18 January 1983 (1983-01-18) | 1,2 | |
| A | * column 3, line 56 - column 4, line 13; claim 1 * ····· | 3-7 | |

| | | | TECHNICAL FIELDS SEARCHED (Int.Cl.7) |
|---|---|---|---|
| | | | C22B C01G |

The present search report has been drawn up for all claims

| Place of search | Date of completion of the search | Examiner |
|---|---|---|
| THE HAGUE | 21 May 2003 | Bombeke, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 02 08 0458

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2003

| Patent document cited in search report | | Publication date | Patent family member(s) | | Publication date |
|---|---|---|---|---|---|
| WO 0136333 | A | 25-05-2001 | NL | 1013590 C2 | 18-05-2001 |
| | | | AU | 2556801 A | 30-05-2001 |
| | | | WO | 0136333 A1 | 25-05-2001 |
| WO 0029605 | A | 25-05-2000 | AU | 1297700 A | 05-06-2000 |
| | | | BR | 9915367 A | 14-08-2001 |
| | | | CA | 2349295 A1 | 25-05-2000 |
| | | | CN | 1326512 T | 12-12-2001 |
| | | | EP | 1131459 A1 | 12-09-2001 |
| | | | JP | 2002530088 T | 17-09-2002 |
| | | | WO | 0029605 A1 | 25-05-2000 |
| | | | ZA | 200103851 A | 13-05-2002 |
| US 5785736 | A | 28-07-1998 | US | 5536297 A | 16-07-1996 |
| | | | CA | 2209559 A1 | 16-01-1998 |
| | | | CA | 2169140 A1 | 11-08-1996 |
| US 4369061 | A | 18-01-1983 | US | 4269622 A | 26-05-1981 |
| | | | CA | 1148748 A1 | 28-06-1983 |
| | | | ZA | 8007196 A | 26-08-1981 |

EPO FORM P0459

For more details about this annex : see Official Journal of the European Patent Office, No. 12/82